**Europäisches Patentamt**

**European Patent Office**

**Office européen des brevets**

(11) Veröffentlichungsnummer: **0 129 133**
**A1**

## (12) EUROPÄISCHE PATENTANMELDUNG

(21) Anmeldenummer: **84106352.2**

(51) Int. Cl.³: **H 02 M 1/10**

(22) Anmeldetag: **04.06.84**

(30) Priorität: **16.06.83 DE 3321903**

(43) Veröffentlichungstag der Anmeldung:
**27.12.84 Patentblatt 84/52**

(84) Benannte Vertragsstaaten:
**AT CH DE FR GB IT LI NL SE**

(71) Anmelder: **Siemens Aktiengesellschaft
Berlin und München Wittelsbacherplatz 2
D-8000 München 2(DE)**

(72) Erfinder: **Schumbrutzki, Walter, Dipl. Ing.
Immergrünstrasse 20
D-8000 München 90(DE)**

(54) Schaltungsanordnung für Elektrogeräte mit automatischer Spannungswahl.

(57) Bei einer Schaltungsanordnung für Elektrogeräte mit automatischer Spannungswahl wird die Netzwechselspannung über den Widerstand ($R_1$), die Diode ($D_1$) und den Siebkondensator ($C_1$) einer integrierten Phasenanschnittsteuerung (IS) zugeleitet. Dadurch wird der Zündwinkel des Triacs (T) in Abhängigkeit von der angelegten Netzwechselspannung verändert. Mit dem Triac (T) wird die Last (L) angesteuert. Die Stromversorgung der integrierten Schaltungen (IS) erfolgt ebenfalls von der Netzwechselspannung über den Gleichrichter ($D_2$), den Widerstand ($R_2$) und den Siebelektrolytkondensator ($C_2$).

FIG 1

EP 0 129 133 A1

SIEMENS AKTIENGESELLSCHAFT
Berlin und München

Unser Zeichen
VPA 83 P 1 4 1 1 E

Schaltungsanordnung für Elektrogeräte mit automatischer Spannungswahl

Die Erfindung betrifft eine Schaltungsanordnung für Elektrogeräte, insbesondere Reiseelektrogeräte, mit automtischer Spannungswahl zum Betrieb an Netzwechselspannungen von 110 bis 220 $V_\sim$, die eine integrierte Schaltung für eine Phasenanschnittsteuerung mit direkt angesteuertem Triac enthält.

Bei Elektrogeräten, die auf Reisen mitgeführt werden, wie beispielsweise elektrische Rasierapparate, Haartrockner, Zahnbürsten, kann es passieren, daß bei Reisen zwischen Ländern mit unterschiedlicher Spannungsversorgung bei der Reise von einem Land mit 110 $V_\sim$ -Netzversorgung in ein Land mit 220 $V_\sim$ -Netzversorgung das Umschalten auf die andere Spannung vergessen wird, da zur Umschaltung mechanische Schalter dienen, die je nach vorhandener Netzspannung beispielsweise Motorwicklungen im Elektrogerät parallel oder in Serie schalten. Wenn dieser Fehler nicht rechtzeitig bemerkt wird, ist im allgemeinen nach kurzer Betriebsdauer die Wicklung des Motors durchgebrannt und damit das Elektrogerät unbrauchbar geworden.

Aufgabe der Erfindung ist es, eine Schaltungsanordnung mit automatischer Spannungswahl für Elektrogeräte anzugeben, die unabhängig von mechanischen Schaltern funktioniert und somit das Problem der richtigen Spannungseinstellung selbsttägig löst.

Sac 1 Gae / 14.06.1983

Diese Aufgabe wird bei der eingangs angeführten
Schaltungsanordnung erfindungsgemäß dadurch gelöst, daß
dem Steuereingang der integrierten Schaltung eine von
der positiven Halbwelle der Netzspannung über einen
Widerstand, eine Diode und einen Siebkondensator abgeleitete Steuerspannung zugeführt ist.

Zweckmäßige Ausgestaltungen der erfindungsgemäßen
Schaltungsanordnung sind in den Unteransprüchen angeführt.

Die Vorteile des Gegenstandes der Erfindung werden anhand der folgenden Ausführungsbeispiele näher erläutert.

In der dazugehörenden Zeichnung zeigen
Fig. 1 ein Blockschaltbild,
Fig. 2 eine Schaltungsanordnung für einen Rasierapparat
    mit Schwingankermotor und
Fig. 3 ein Impulsdiagramm.

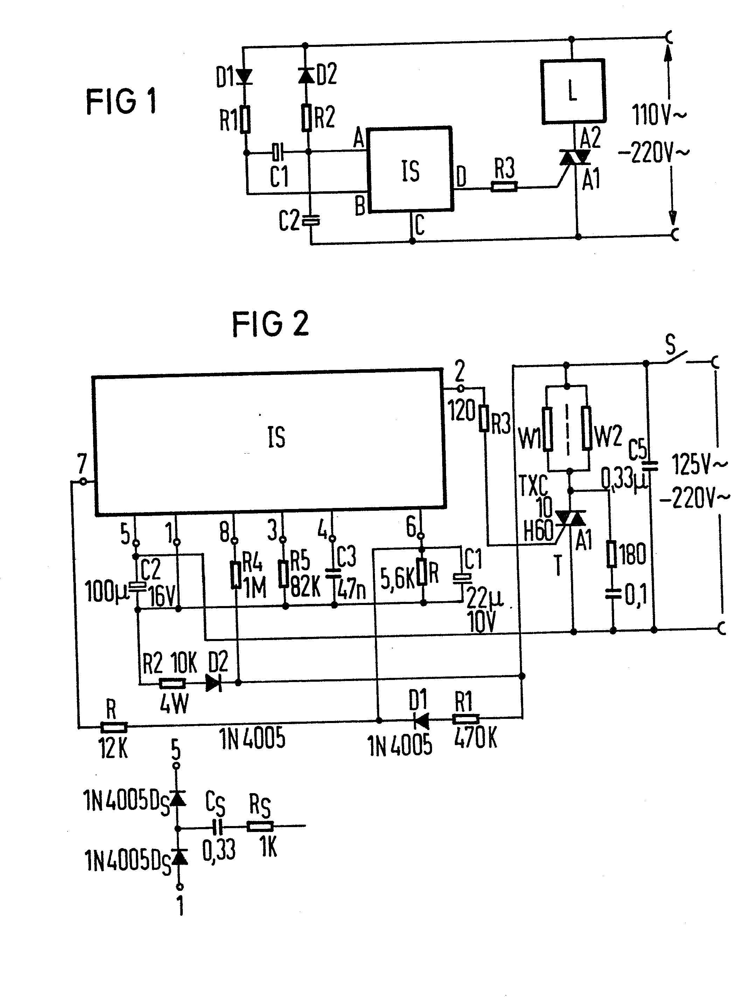

In der Fig. 1 ist ein Blockschaltbild einer erfindungsgemäßen Schaltungsanordnung dargestellt. Von der
positiven Halbwelle der Netzwechselspannung, die 110 $V_\sim$
bis 220 $V_\sim$ betragen kann, wird über den Widerstand
$R_1$, die Diode $D_1$ und den Siebkondensator $C_1$ eine
Spannung abgeleitet, die dem Steuereingang B der integrierten Schaltung IS zugeführt wird. Die am Steuereingang B anliegende Spannung ist somit proportional der
angelegten Netzwechselspannung.

Die integrierte Schaltung IS ist für eine Phasenanschnittsteuerung ausgelegt, so daß am Ausgang D
Steuerimpulse anstehen, die sich - wie weiter unten
beschrieben wird - zwischen $0^o$ und dem Phasen-

winkel    verschieben lassen. Derartige integrierte
Schaltungen für Phasenanschnittsteuerungen sind beispielsweise im SIEMENS-DATENBUCH 1982/83 "Integrierte
Schaltungen für industrielle Anwendungen" auf den Seiten
210 bis 218 und S. 263 bis 273 beschrieben (TCA 780 und
TLB 3101).

Die Stromversorgung der integrierten Schaltung IS erfolgt über den Gleichrichter $D_2$, den Widerstand $R_2$ und
den Siebelektrolytkondensator $C_2$ am Eingang A.

Die am Ausgang D der integrierten Schaltung IS anstehenden Impulse werden über den Widerstand $R_3$ dem
Triac T zugeleitet, der seinerseits die Last L ansteuert.

In der Fig. 2 ist die Schaltungsanordnung für einen
elektrischen Rasierapparat dargestellt, bei dem die Last
durch die zwei Wicklungen $W_1$ und $W_2$ des Transformators
für den Schwingankermotor gebildet wird. Das Gerät, das
für Netzwechselspannungen von 110 V $\sim$    bis 220 V $\sim$
eingesetzt werden kann, wird über den Schalter S aus-
bzw. eingeschaltet. Der Steuereingang 6 der integrierten Schaltung IS wird mit der über den Widerstand
$R_1$, die Diode $D_1$ und den Siebkondensator $C_1$ von der
positiven Netzhalbwelle abgeleiteten Steuerspannung beaufschlagt.

Zur Stromversorgung der integrierten Schaltung IS wird
in der neg. Netzhalbwelle der Siebkondensator $C_2$ über
$D_2$ und $R_2$ bis auf die Zenerspannung einer integrierten
Zenerdiode aufgeladen. $C_2$ liefert dann in der pos. Halbwelle den erforderlichen IS-Strom. Alternativ kann zur
Stromversorgung auch eine Kombination von Kondensator
$C_s$, Widerstand $R_s$ und Dioden $D_s$ verwendet werden.

Zur Synchronisation mit der Netzwechselspannung wird an den Synchronisationseingang 8 der integrierten Schaltung IS die Netzwechselspannung über den Widerstand $R_4$ angelegt.

Parallel zum Eingang der Schaltungsanordnung ist ein Entstörkondensator $C_5$ geschaltet.

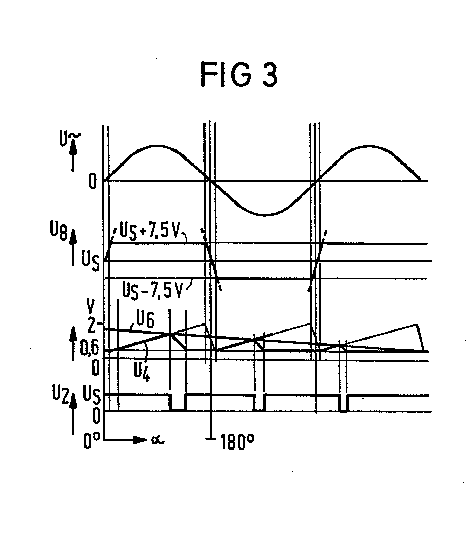

Die Funktionsweise der erfindungsgemäßen Schaltungsanordnung wird anhand des in der Fig. 3 dargestellten Impulsdiagramms erläutert.

In der integrierten Schaltung ist ein Nulldetektor enthalten, dem die von der Netzspannung abgeleitete Synchronisierspannung $U_8$ zugeleitet wird. Dieser Nulldetektor wertet die Nulldurchgänge aus und führt sie einem Synchronisierspeicher zu. Dieser steuert einen Rampengenerator, dessen Kondensator $C_3$ durch einen Konstantstrom, der durch den Widerstand $R_5$ festgelegt ist, aufgeladen wird. Erreicht die Rampenspannung $U_4$ die Steuerspannung $U_6$ (Schaltpunkt $\propto$ ) wird ein Signal an eine Logik weitergeleitet.

Der Fig. 3 ist zu entnehmen, daß in Abhängigkeit von der Größe der Steuerspannung $U_6$ der Schaltpunkt $\propto$ um einen beliebigen Phasenwinkel verschoben werden kann.

Am Ausgang 2 der integrierten Schaltung IS erscheint für jede Halbwelle je ein negativer Impuls, dessen Dauer durch den Impulskondensator $C_3$ bestimmt werden kann.

Der Triac T erhält somit während der positiven Halbwelle der Netzspannung einen negativen Gateimpuls vom IS-Ausgang 2 und während der negativen Netzhalbwelle ebenfalls einen negativen Zündimpuls vom Ausgang 2.

Durch die erfindungsgemäße Schaltungsanordnung mit Phasenanschnitt wird erreicht, daß die Spannungs-Zeit-Fläche über der Last L annähernd konstant bleibt. Das elektrische Gebrauchsgerät wird dabei für 110 V$\sim$ angelegt. Mit steigender Netzspannung wird der Phasenanschnittwinkel $\alpha$ automatisch dadurch vergrößert, daß die von der Netzwechselspannung abgeleitete Steuerspannung $U_6$ angehoben wird. Bei 220 V$\sim$ hat der Phasenanschnittwinkel $\alpha$ einen Wert von ca. 90° erreicht.

Durch die erfindungsgemäße Schaltungsanordnung wird somit in einfacher Weise eine automatische Spannungswahl erreicht, so daß Elektrogeräte nicht mehr unbeabsichtigt durch vergessene Umstellung zerstört werden können.

3 Patentansprüche
3 Figuren

Patentansprüche

1. Schaltungsanordnung für Elektrogeräte, insbesondere Reiseelektrogeräte, mit automatischer Spannungswahl zum Betrieb an Netzwechselspannungen von 110 bis 220 V∿ die eine integrierte Schaltung für eine Phasenansteuerung mit direkt angesteuertem Triac enthält, d a d u r c h   g e k e n n z e i c h n e t , daß dem Steuereingang (6) der integrierten Schaltung (IS) eine von der positiven Halbwelle der Netzspannung über einen Widerstand ($R_1$) eine Diode ($D_1$) und einen Siebkondensator ($C_1$) abgeleitete Steuerspannung ($U_6$) zugeführt ist.

2. Schaltungsanordnung nach Anspruch 1, d a d u r c h   g e k e n n z e i c h n e t ,  daß die Spannung ($U_8$) am Synchronisationseingang (8) der integrierten Schaltung (IS) intern durch zwei Zenerdioden begrenzt ist.

3. Schaltungsanordnung nach einem der Ansprüche 1 oder 2 zum Einsatz in Rasierapparaten mit Schwingankerantrieb, d a d u r c h   g e k e n n z e i c h n e t ,  daß die Spannungsversorgung der integrierten Schaltung (IS) durch eine Gleichrichterdiode ($D_2$), einen Widerstand ($R_2$) und einen Siebelektrolytkondensator ($C_2$) direkt aus dem Netz erfolgt.

0129133

1/2

FIG 1

FIG 2

## FIG 3

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | ELEKTRONIK, Band 32, Nr. 9, Mai 1983, Seiten 81-84, München, DE; R. POLZ: "Universelle Motor-Phasenanschnittsteuerung" * Ganze Artikel * | 1 | H 02 M 1/10 |
| | --- | | |
| A | US-A-4 001 668 (LEWIS) * Spalte 1, Zeile 60 - Spalte 2, Zeile 17 * | 1 | |
| | ----- | | |

**RECHERCHIERTE SACHGEBIETE (Int. Cl. 3)**

H 02 M
G 05 F
H 02 P

Der vorliegende Recherchenbericht wurde für alle Patentansprüche erstellt.

| Recherchenort DEN HAAG | Abschlußdatum der Recherche 05-09-1984 | Prüfer KERN H. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82